# EUROPÄISCHE PATENTSCHRIFT

(11) **EP 3 232 543 B1**
(45) Veröffentlichungstag und Bekanntmachung des Hinweises auf die Patenterteilung: **08.04.2020**
(21) Anmeldenummer: 17163471.0
(22) Anmeldetag: 29.03.2017
(51) Int. Cl.: H02K 5/128, H02K 9/197, H02K 9/22, H02K 11/33, H05K 1/02, H02K 7/14

(54) **PUMPENMOTOR MIT EINEM SPALTTOPF**
PUMP MOTOR HAVING AN AIR-GAP SHROUD
MOTEUR DE POMPE COMPRENANT UN POT D'ENTREFER

(30) Priorität: 15.04.2016 DE 102016206406
(43) Veröffentlichungstag der Anmeldung: 18.10.2017
(73) Patentinhaber: Bühler Motor GmbH, 90459 Nürnberg (DE)
(72) Erfinder: EHRSAM, Jürgen, 90766 Fürth (DE)

(56) Entgegenhaltungen:
- EP-A1- 2 790 474
- EP-A1- 3 001 037
- EP-A2- 1 850 449
- WO-A1-2016/000930
- DE-A1-102009 031 466
- DE-U1- 20 007 099
- US-A1- 2015 257 249
- US-B1- 6 621 705

## Beschreibung

Die Erfindung betrifft einen Pumpenmotor (1), mit einem Motorgehäuse (10), einem Pumpenkopf (11), und einem Spalttopf (3), wobei der Pumpenkopf (11) mit dem Spalttopf (3) einen Nassraum (26) begrenzt und der Spalttopf (3) mit dem Motorgehäuse (10) einen Trockenraum (25) begrenzt, ein Permanentmagnetrotor (2) in dem Nassraum (26) um eine Achse (49) drehbar gelagert ist, ein bewickelten Stator (4) und eine Leiterplatte (20) in dem Trockenraum (25) angeordnet sind und die Leiterplatte (20) einem Spalttopfboden (17) gegenüberliegt.

Bei Verbrennungsmotoren im Kfz-Bereich sind in der Regel von der Kurbelwelle über einen Zahnriemen angetriebene mechanische Pumpen als Hauptkühlwasserpumpe vorhanden. Als Unterstützung oder ersatzweise bei abgestelltem Verbrennungsmotor kommen elektrische Zusatzkühlwasserpumpen zum Einsatz, die in der Regel als elektronisch kommutierte Gleichstrommotoren ausgebildet sind. Auch Hauptkühlwasserpumpen können elektrisch betrieben sein. Gleichfalls werden Kühlwasserpumpen auch bei Hybrid- und Elektrofahrzeugen eingesetzt. Dort vor allem im Kühlkreislauf einer Akkukühlung. Elektronisch kommutierte Gleichstrommotoren weisen in der Regel Leiterplatten mit elektronischen Bauelementen, insbesondere Leistungsbauteile für die Kommutierung der Statorwicklung, auf. In diesen Bauelementen entsteht je nach Leistungsklasse mehr oder weniger Wärme, die möglichst einfach abführbar sein sollte, um Schäden durch Überhitzung zu vermeiden. Es ist üblich die Wärmeleistung über den Spalttopf in das zu fördernde Medium zu leiten, sofern das Medium als Wärmesenke dienen kann. Durch die fortlaufende Umwälzung des Mediums wird die Wärme durch erzwungene Konvektion aus dem Pumpenraum transportiert und z. B. an einen Fahrzeugkühler abgegeben. Da für den Wärmeübergang nur eine relativ kleine Fläche zur Verfügung steht kann nur eine begrenzte Entwärmungsleistung erzielt werden, wodurch die Einsatzmöglichkeiten der Pumpe beschränkt sind.

Die nächstliegende EP 1 850 449 A2 offenbart einen Pumpenmotor (100) mit einem Motorgehäuse (44), einem Pumpenkopf (102) und einem Spalttopf (116), wobei der Pumpenkopf (102) mit dem Spalttopf (116) einen Nassraum (101) begrenzt und der Spalttopf (116) mit dem Motorgehäuse (44) einen Trockenraum (99) begrenzt, ein Permanentmagnetrotor (50) in dem Nassraum (101) um eine Achse (49) drehbar gelagert ist, ein bewickelter Stator (40) und eine Leiterplatte (60) in dem Trockenraum (99) angeordnet sind und die Leiterplatte (61) einem Spalttopfboden (117) gegenüberliegt.

Die US 2015/0257249 A1 offenbart Ausführungsformen einer Wärmemanagementeinheit und einer elektronischen Vorrichtung. Die Wärmemanagementeinheit ist als Wärmesenke ausgebildet, die einen Basisabschnitt mit einer ersten Vorsprungsstruktur und einer zweiten Vorsprungsstruktur umfasst. Die Vorsprungsstrukturen sind mit einem Wärmeleitmittel (21), z. B. einer Wärmeleitpaste, gefüllt.

Aus der EP 3 001 037 A1 ist ein Pumpenmotor (100) mit einem Motorgehäuse (44), einem Pumpenkopf (102) und einem Spalttopf (116), wobei der Pumpenkopf (102) mit dem Spalttopf (116) einen Nassraum (101) begrenzt und der Spalttopf (116) mit dem Motorgehäuse (44) einen Trockenraum (99) begrenzt, ein Permanentmagnetrotor (50) in dem Nassraum (101) um eine Achse (49) drehbar gelagert ist, ein bewickelter Stator (40) und eine Leiterplatte (60) in dem Trockenraum (99) angeordnet sind und die Leiterplatte (61) einem Spalttopfboden (117) gegenüberliegt, bekannt.

Die DE 200 07 099 U1 zeigt einen Pumpenmotor (100) mit einem Motorgehäuse (44), einem Pumpenkopf (102) und einem Spalttopf (116), wobei der Pumpenkopf (102) mit dem Spalttopf (116) einen Nassraum (101) begrenzt und der Spalttopf (116) mit dem Motorgehäuse (44) einen Trockenraum (99) begrenzt, ein Permanentmagnetrotor (50) in dem Nassraum (101) um eine Achse (49) drehbar gelagert ist, ein bewickelter Stator (40) und eine Leiterplatte (60) in dem Trockenraum (99) angeordnet sind und die Leiterplatte (61) einem Spalttopfboden (117) gegenüberliegt.

Die DE 10 2009 031 466 A1 offenbart einen Elektromotor, umfassend einen Anschlusskasten, der ein auf dem Motorgehäuse befestigtes oder einstückig ausgeführtes Unterteil und ein darauf verbindbares Oberteil aufweist. Das Oberteil ragt axial über den Anschlusskasten und Kühlfinger erstrecken sich zum Motor hin.

Die WO 2016/000930 offenbart einen elektrischen Verdichter für eine Verbrennungskraftmaschine mit einem Elektromotor, der einen radial innenliegenden Rotor und einen radial außen liegenden Stator aufweist, einer Antriebswelle, auf der der Rotor befestigt ist, einem Laufrad, welches mit der Antriebswelle verbunden ist und in einem Strömungsraum zwischen einem Einlass und einem Auslass angeordnet ist, sowie einem Motorgehäuse mit einer Umfangswand, an deren Innenfläche der Stator mit mehreren gleichmäßig angeordneten Statorzähnen durch Einpressen befestigt ist. Das Motorgehäuse weist sechs gleichmäßig über den Umfang verteilte Rippen auf, die jeweils mittig in einen Zwischenraum zwischen den Wicklungsköpfen ragen. Zudem weist die Außenfläche des Stators zur Umfangswand des Motorgehäuses einen geringen Abstand auf, der eine gute Wärmeabfuhr ermöglicht. Ein Spalt, der durch diesen geringen Abstand entsteht, kann durch gut Wärme leitendes Dämpfungsmaterial gefüllt werden.

Die EP 2 790 474 A1 zeigt eine Leiterplatte, die mindestens eine Peltier-Wärmepumpenvorrichtung umfasst. Die Peltier-Wärmpepumpenvorrichtung enthält Halbleiterelemente, die thermisch parallel und elektrisch in Reihe angeordnet sind und in der Leiterplatte einbettet sind. Auf der Leiterplatte sind vergrößerte Leiterbahnbereiche vorgesehen, die mit einem Wärmeleitmittel in wärmeleitendem Kontakt stehen.

Die US 6 621 705 B1 offenbart Kühlkörperelemente, die auf der Oberfläche einer Leiterplatte montiert werden. Die Leiterplatte ist mit vergrößerten Leiterbahnbereichen versehen, welche mit einem Wärmeleitmittel in Kontakt stehen. Aufgabe der Erfindung ist es daher bei einem gattungsgemäßen Pumpenmotor auf wirtschaftliche Weise für eine zuverlässige Wärmeabfuhr mit erhöhter Entwärmungsleistung von der Leiterplatte in das zu fördernde Medium zu sorgen.

Diese Aufgabe wird durch die Merkmale des Anspruchs 1 gelöst. Durch die Vertiefungen und die gegenüberliegenden Vorsprünge erhöht sich die für den Wärmeübergang zur Verfügung stehende Fläche erheblich. Auf diese Weise kann der Pumpenmotor mit einer deutlich höheren Leistung betrieben werden, ohne die Gefahr einer Beschädigung von elektronischen Bauteilen einzugehen.

Weiterbildungen der Erfindung werden in den Unteransprüchen dargestellt. Es hat sich als besonders effektiv herausgestellt, wenn die Vertiefungen im Spalttopfboden mit einem Wärmeleitmittel, z. B. einer Wärmeleitpaste gefüllt sind. Das Wärmeleitmittel kann alle Oberflächenbereiche der Vertiefungen benetzen und für einen deutlich besseren Wärmeübergang sorgen.

Die Vertiefungen können so ausgebildet sein, dass sich der Querschnitt der Vertiefungen in achsparalleler Richtung und Richtung Permanentmagnetrotor verringert.

Die Oberfläche des Spalttopfbodens kann sich aufgrund der Vertiefungen erheblich vergrößern. Es ist vorgesehen, die Vertiefungen so zu dimensionieren, dass die Oberfläche um mehr als das Zweifache gegenüber einem ebenen Spalttopfboden vergrößert ist.

Auf der Nassseite sind vorzugsweise zylindrisch kegelförmige Vorsprünge vorgesehen. Eine Vielzahl dieser Vorsprünge kann die Oberfläche stark vergrößern. Auch hier wird in einem ersten Schritt eine Oberflächenvergrößerung vorgeschlagen, welche mehr als das Zweifache der Oberfläche eines ebenen Spalttopfbodens entspricht.

Bei einer weiterentwickelten Pumpe wird die Oberfläche auf zumindest das Dreifache eines ebenen Spalttopfbodens vergrößert, wodurch sich noch höhere Entwärmungsleistungen erzielen lassen.

Gemäß einer Weiterbildung der Erfindung werden auf der Leiterplatte vergrößerte Leiterbahnbereiche vorgesehen, welche mit dem Wärmeleitmittel, z. B. einer Wärmeleitpaste, in wärmeleitendem Kontakt stehen. Diese Leiterbahnbereiche bestehen aus Kupfer und können die Wärme in der Leiterplattenebene gut verteilen, so dass auch an entfernteren Bereichen der Leiterplatte höhere Temperaturgradienten zum Spalttopfboden hin bestehen.

Besonders vorteilhaft ist der Einsatz von Thermovias, welche die Wärme, welche auf einer ersten Leiterplatte entsteht, auf die gegenüberliegende Seite weiterleitet. Auf dieser in der Regel unbestückten Seite besteht viel Platz um vergrößerte Leiterbahnbereiche unterzubringen. Je wärmeerzeugendem Bauteil ist dabei eine Vielzahl an Thermovias vorgesehen, um die Wärmeleitungsfähigkeit zu optimieren.

Ausführungsbeispiele der Erfindung werden nachfolgend anhand der Zeichnung näher erläutert. Es zeigen:
- Fig. 1: eine Schnittansicht eines erfindungsgemäßen Pumpenmotors,
- Fig. 2: einen Ausschnitt aus Fig. 1,
- Fig. 3: eine Leiterplatte mit vergrößerten Leiterbahnbereichen,
- Fig. 4: eine Leiterplatte mit Thermovias,
- Fig. 5: eine räumliche Darstellung des Pumpenmotors,
- Fig. 6: eine räumliche Darstellung eines Spalttopfs und
- Fig. 7: eine weitere Darstellung des Spalttops.

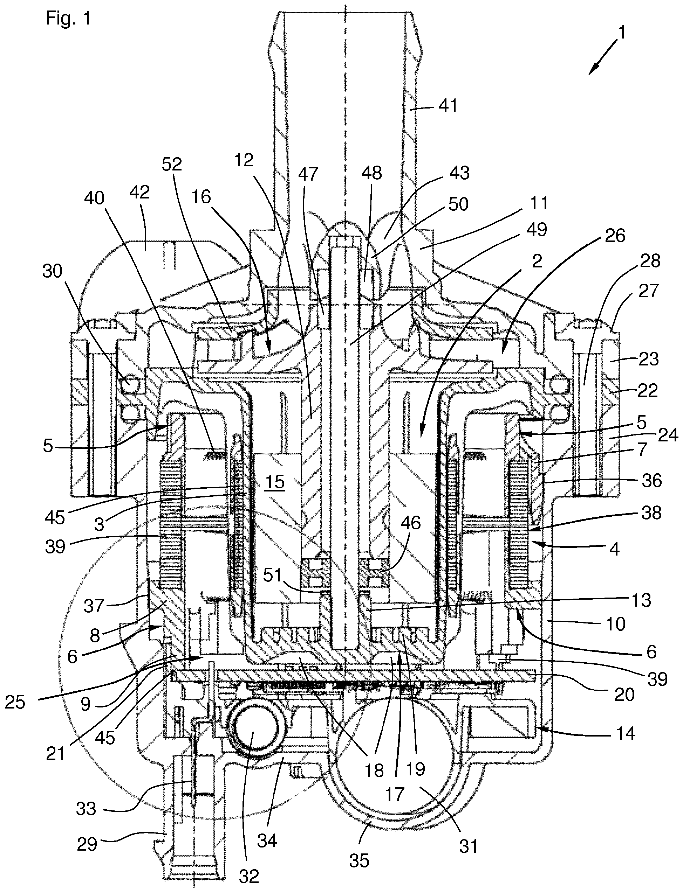

Fig. 1 zeigt eine Schnittansicht eines erfindungsgemäßen Pumpenmotors 1, mit einem bewickelten Stator 4, einem Permanentmagnetrotor 2, einem Spalttopf 3, einem Pumpenkopf 11, einer Leiterplatte 20, einer Trägerplatte 14 und einem Motorgehäuse 10. Der Stator 4, die Leiterplatte 20 und die Trägerplatte 14 befinden sich in einem Trockenraum 25. Der Permanentmagnetrotor 2 ist in einem Nassraum 26 um eine Achse 49 drehbar gelagert, welche einerseits im Spalttopf 3 und andererseits im Pumpenkopf 11 festgelegt ist. Der Stator 4 umfasst ein Statorblechpaket 38, Isolierelemente 5, 6 und eine Statorwicklung 40. Radial erstrecken sich Befestigungsvorsprünge 7, 8 aus den Isolierelementen 5, 6. Die Befestigungsvorsprünge 7, 8 weisen Schweißbereiche 36, 37 auf, an welchen sie mit dem Motorgehäuse 10 fest verbunden sind. Das zweite Isolierelement 6 ist mit axial eingesteckten Wicklungsanschlüssen 39 bestückt, welche als Einpresskontakte mit der Leiterplatte 20 mechanisch und elektrisch verbunden sind. Der Stator 4 ist vom Spalttopf 3 weitgehend entkoppelt. Ein leiterplattenseitiges Isolierelement 6 umfasst Axialvorsprünge 9, mit welchen sie an der Leiterplatte 20 axial anliegen. Die Leiterplatte 20 ist zwischen den Axialvorsprüngen 9 und der Trägerplatte 14 formschlüssig festgelegt. Die Trägerplatte 14 weist eine Anschlagfläche 45 auf, welche zur axialen Fixierung der Leiterplatte 20 dient. Auf der gegenüberliegenden Seite der Trägerplatte 14 liegt diese an einem Boden 34 des Motorgehäuses 10 an. Weiter umfasst die Trägerplatte 14 Radialbegrenzungsmittel 21, durch welche der radiale Einbauraum der Leiterplatte 20 begrenzt ist. Weiter umfasst das Motorgehäuse 10 an seinem Boden 34 einen Steckerschacht 29. Der Spalttopf 3 weist einen Spalttopfflansch 22 und der Pumpenkopf 11 einen Pumpenkopfflansch 23 auf. Das Motorgehäuse 10 ist topfartig ausgebildet und weist einen Gehäuseflansch 24 und einen Steckerschacht 29 auf. Der Pumpenkopfflansch 23, der Spalttopfflansch 22 und der Gehäuseflansch 24 weisen Anschraubaugen 27 mit Schrauben 28 auf, durch welche der Pumpenkopf 11 und der Spalttopf 3 mit dem Motorgehäuse 10 verschraubt sind. Beiderseits des Spalttopfflanschs 23 sind O-Ringe 30 als Dichtelemente angeordnet. Die Leiterplatte 20 ist mit einer Vielzahl von SMD-Bauteilen bestückt. Größere Bauteile, wie ein Elektrolytkondensator 31 und eine Drosselspule 32 sind auf der Trägerplatte 14 mechanisch gehalten, aber auf der Leiterplatte 20 elektrisch kontaktiert. Die Leiterplatte 20 und die Trägerplatte 14 sind zwischen dem Stator 4 und dem Motorgehäuse 10 axial fixiert. Die Leiterplatte 20 ist zwischen dem Stator 4 und der Trägerplatte 14 axial und radial fixiert. In der Trägerplatte 14 ist ein Kontaktelement 33 mechanisch aufgenommen, welches ebenfalls mit der Leiterplatte 20 elektrisch verbunden ist. Ein Boden 34 des topfartigen Motorgehäuses 10 weist eine Ausbuchtung 35 auf, in welche an die Form des Elektrolytkondensators 31 angepasst ist. Weiter ist ein Pumpenlaufrad 16 dargestellt, welches mit einer Hohlwelle 12 einstückig ist. Das Pumpenlaufrad 16 weist eine Deckscheibe 52 auf. Der Permanentmagnetrotor 2 mit Pumpenlaufrad 16 ist über ein Festlager 46 und ein sphärisches Gleitlager 47 auf der Achse 49 und zwischen dem Pumpenkopf 11 und dem Spalttopf 3 drehbeweglich gelagert. Das sphärische Lager 47 liegt an einem sphärischen Gegenlager 48 an. Das Festlager 46 ist zwischen einem um die Hohlwelle 12 gespritzten hohlzylindrischen und aus einem kunststoffgebundenen Material bestehenden Permanentmagneten 15 und der Achse 49 angeordnet. Das Festlager 46 lagert das Pumpenlaufrad 16 radial als auch über das Ende der Hohlwelle 12 und einer Anlaufscheibe 51, welche an einer mit dem Spalttopf 3 einstückigen Achsaufnahmehülse 13 anliegt, axial. Der Pumpenkopf 11 umfasst einen Saugstutzen 41 und einen Druckstutzen 42. Im Saugstutzen 41 stellen Speichen 43 eine durchlässige Verbindung zwischen dem Saugstutzen 41 und einer Aufnahme 50 her. Weiter ist ein Spalttopfboden 17 mit Vorsprüngen 19 und Vertiefungen 18 dargestellt.

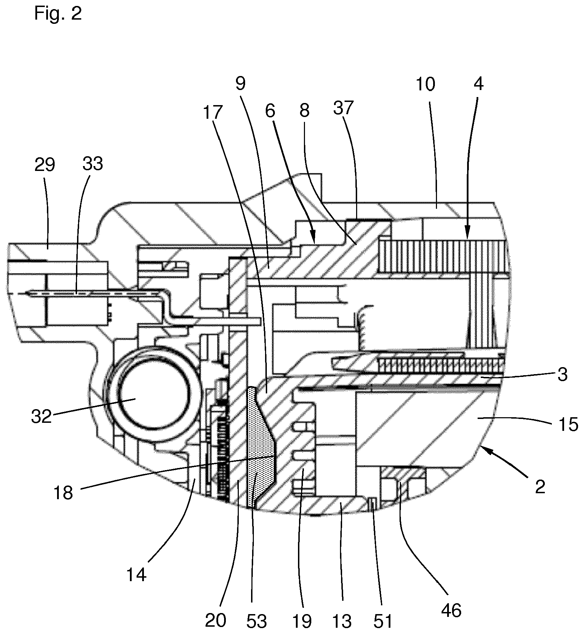

Fig. 2 zeigt einen Ausschnitt aus Fig. 1, mit dem Motorgehäuse 10, dem Stator 4, dem zweiten Isolierelement 6, dem zweiten Befestigungsvorsprung 8, dem zweiten Schweißbereich 37, dem Axialvorsprung 9, der Leiterplatte 20, der Trägerplatte 14, dem Permanentmagnetrotor 2, mit dem Permanentmagneten 15, dem Spalttopf 3, dem Spalttopfboden 17, der Vertiefung 18, den Vorsprüngen 19, der Achsaufnahmehülse 13, dem Festlager 46, der Anlaufscheibe 51, dem Steckerschacht 29, dem Kontaktelement 33, der Drosselspule 32 und einem Wärmeleitmittel 53. Das Wärmeleitmittel 53 füllt die Vertiefungen 18 und - falls vorhanden - einen Zwischenraum zwischen dem Spalttopfboden 17 und der Leiterplatte 20 auf.

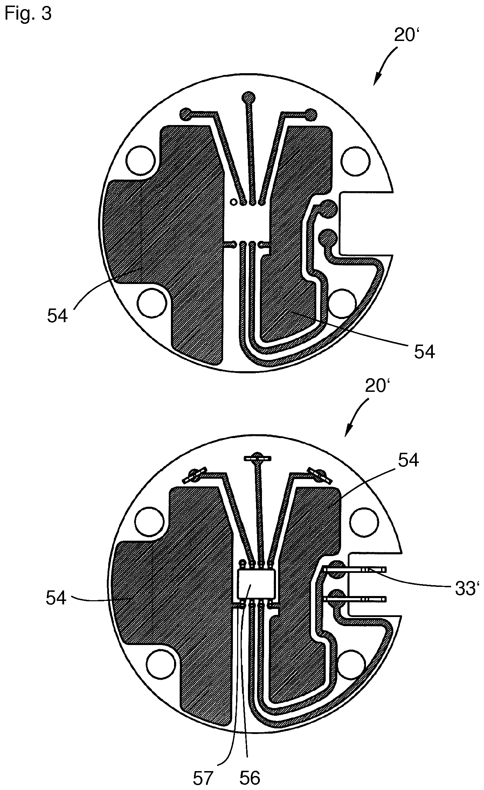

Fig. 3 zeigt eine Leiterplatte 20' mit vergrößerten Leiterbahnbereichen 54, wodurch die Wärmeübertragung auf ein Wärmeleitmittel 53 verbessert ist. Ein Bauelement 56 erzeugt Wärme, welche über Leiterbahnen 57 auf die vergrößerten Leiterbahnbereiche 54 geleitet wird. Hier ist das Bauelement 56 auf derselben Seite wie die Leiterbahnbereiche 54 angeordnet. Der Abstand zum Topfboden muss durch das Wärmeleitmittel überwunden werden. Für das Bauelement 56 kann alternativ eine weitere Vertiefung 18 im Spalttopfboden 17 vorgesehen sein.

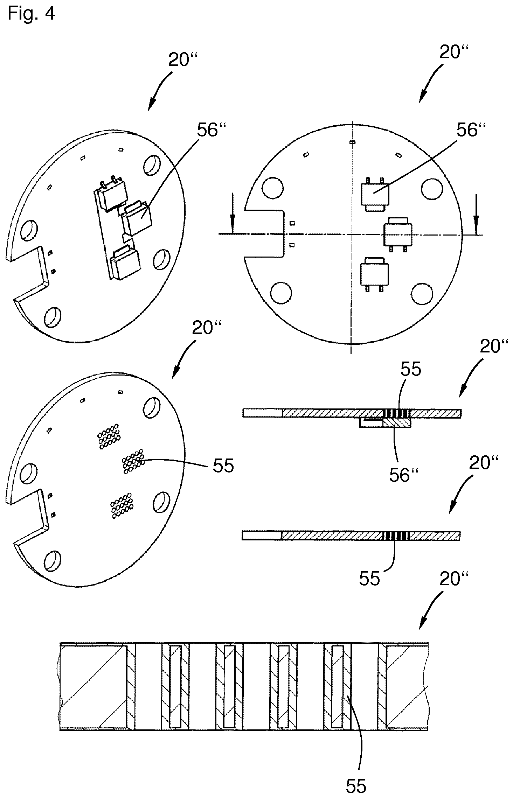

Fig. 4 zeigt eine Leiterplatte 20" mit Thermovias 55 und Wärme erzeugende Bauelemente 56". Die Thermovias 55 leiten die von den Bauelementen 56" erzeugte Wärme auf die gegenüberliegende Leiterplattenseite. Je Bauelement 56" ist eine Vielzahl von Thermovias 55 vorgesehen, um den Leiterquerschnitt zu vergrößern. Auf der gegenüberliegenden Seite können vergrößerte Leiterbahnbereiche 54 für einen verbesserten Wärmeübergang in ein Wärmeleitmittel 53 oder unmittelbar auf den Spalttopfboden 17 sorgen.

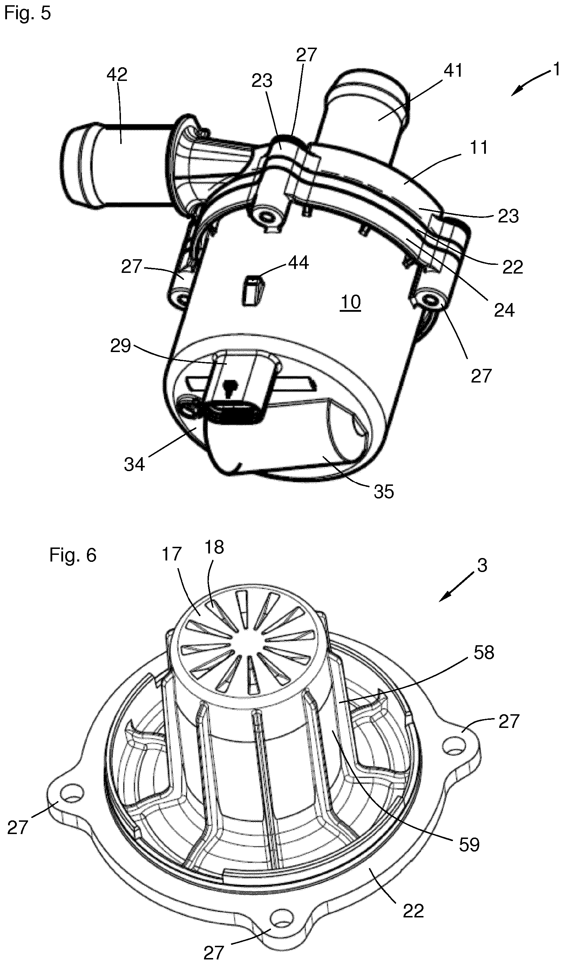

Fig. 5 zeigt eine räumliche Darstellung des Pumpenmotors 1, mit dem Pumpenkopf 11, mit Saugstutzen 41 und Druckstutzen 42 und dem Pumpenkopfflansch 23, dem mit dem Spalttopf 3 einstückigen Spalttopfflansch 22, dem Motorgehäuse 10 mit dem Gehäuseflansch 24, dem Boden 34, dem Steckerschacht 29 und der Ausbuchtung 35 zur Aufnahme eines Elektrolytkondensators 31. Weiter sind Anschraubaugen 27 zu erkennen, welche im Pumpenkopfflansch 23, dem Spalttopfflansch 22 und dem Gehäuseflansch 24 als Erweiterungen ausgebildet sind und eine Schraubverbindung ermöglichen. Am Motorgehäuse 10 ist eine Axialsicherung 44 ausgebildet, welche dazu dient eine um das Motorgehäuse 10 gelegte ringförmige Befestigungseinrichtung axial zu sichern.

Fig. 6 zeigt eine räumliche Darstellung des Spalttopfs 3 mit Kühlrippen 58, die im eingebauten Zustand in Statornuten eingreifen. Die Kühlrippen 58 sind im Wesentlichen mit einer zylindrischen Mantelfläche 59 des Spalttopfs 3 einstückig und erstrecken sich aus diesem radial nach außen. Die Kühlrippen 58 setzen sich an dem Spalttopfflansch 22 teilweise fort. An diesen schließen die Anschraubaugen 27 an. Im Spalttopfboden 17 sind die Vertiefungen 18 eingeformt. Die Vertiefungen 18 verlaufen von radial außen nach innen vom Spalttopfboden 17 aus stetig bis zu einer maximalen Tiefe, verbleiben abschnittweise bei dieser Tiefe und laufen dann stetig, aber etwas steiler zurück zum Spalttopfboden 17. Diese Formgebung ist spritzgusstechnisch bedingt. Die Vertiefungen 18 weisen eine kreissegmentartige Grundfläche auf.

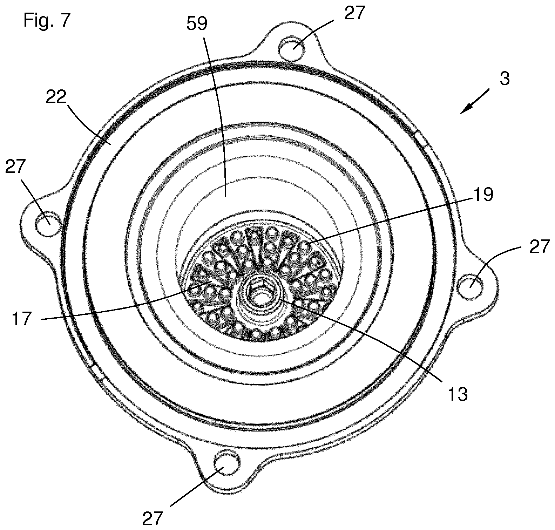

Fig. 7 zeigt eine weitere Darstellung des Spalttopfs 3 von der gegenüberliegenden Seite aus betrachtet. Aus dem Spalttopfboden 17 springt im zentralen Bereich die Achsaufnahmehülse 13 vor. Aus dem Spalttopfboden 17 springt weiter eine Vielzahl von Vorsprüngen 19 axial vor. Die Vorsprünge 19 sind hier als zylindrische Zapfen ausgebildet. Weiter ist der Spalttopfflansch 22 mit den Anschraubaugen 27 und die Mantelfläche 59 dargestellt.

**Bezugszeichenliste**

| | | | |
|---|---|---|---|
| 1 | Pumpenmotor | 31 | Elektrolytkondensator |
| 2 | Permanentmagnetrotor | 32 | Drosselspule |
| 3 | Spalttopf | 33 | Kontaktelement |
| 4 | Stator | 34 | Boden |
| 5 | erstes Isolierelement | 35 | Ausbuchtung |
| 6 | zweites Isolierelement | 36 | erster Schweißbereich |
| 7 | erster Befestigungsvorsprung | 37 | zweiter Schweißbereich |
| 8 | zweiter Befestigungsvorsprung | 38 | Statorblechpaket |
| 9 | Axialvorsprung | 39 | Wicklungsanschluss |
| 10 | Motorgehäuse | 40 | Statorwicklung |
| 11 | Pumpenkopf | 41 | Saugstutzen |
| 12 | Hohlwelle | 42 | Druckstutzen |
| 13 | Achsaufnahmehülse | 43 | Speiche |
| 14 | Trägerplatte | 44 | Axialsicherung |
| 15 | Permanentmagnet | 45 | Anschlagfläche |
| 16 | Pumpenlaufrad | 46 | Festlager |
| 17 | Spalttopfboden | 47 | sphärisches Gleitlager |
| 18 | Vertiefungen | 48 | sphärisches Gegenlager |
| 19 | Vorsprung | 49 | Achse |
| 20 | Leiterplatte | 50 | Aufnahme |
| 21 | Radialbegrenzungsmittel | 51 | Anlaufscheibe |
| 22 | Spalttopfflansch | 52 | Deckscheibe |
| 23 | Pumpenkopfflansch | 53 | Wärmeleitmittel |
| 24 | Gehäuseflansch | 54 | Leiterbahnbereich |
| 25 | Trockenraum | 55 | Thermovia |
| 26 | Nassraum | 56 | Bauelement |
| 27 | Anschraubauge | 57 | Leiterbahn |
| 28 | Schraube | 58 | Kühlrippe |
| 29 | Steckerschacht | 59 | Mantelfläche |
| 30 | O-Ring | | |

## Patentansprüche

1. Pumpenmotor (1), mit einem Motorgehäuse (10), einem Pumpenkopf (11), und einem Spalttopf (3), wobei der Pumpenkopf (11) mit dem Spalttopf (3) einen Nassraum (26) begrenzt und der Spalttopf (3) mit dem Motorgehäuse (10) einen Trockenraum (25) begrenzt, ein Permanentmagnetrotor (2) in dem Nassraum (26) um eine Achse (49) drehbar gelagert ist, ein bewickelten Stator (4) und eine Leiterplatte (20) in dem Trockenraum (25) angeordnet sind und die Leiterplatte (20) einem Spalttopfboden (17) gegenüberliegt, **dadurch gekennzeichnet, dass** der Spalttopfboden (17) auf einer der Leiterplatte (20) gegenüberliegenden Seite Vertiefungen (18) und auf einer gegenüberliegenden Seite Vorsprünge (19) aufweist.

2. Pumpenmotor nach Anspruch 1, **dadurch gekennzeichnet, dass** die Vertiefungen (19) mit einem Wärmeleitmittel (53), z. B. einer Wärmeleitpaste gefüllt sind, welche einen Wärmeleitpfad vom Spalttopfboden (17) zur Leiterplatte (20) bilden.

3. Pumpenmotor nach Anspruch 1 oder 2, **dadurch gekennzeichnet, dass** sich der Querschnitt der Vertiefungen (18) in achsparalleler Richtung und Richtung Permanentmagnetrotor (2) verringert.

4. Pumpenmotor nach Anspruch 1, 2 oder 3, **dadurch gekennzeichnet, dass** die Oberfläche des Spalttopfbodens (17) aufgrund der Vertiefungen (18) gegenüber einem ebenen Spalttopfboden (17) um mehr als das Zweifache vergrößert ist.

5. Pumpenmotor nach Anspruch 1, 2, 3 oder 4, **dadurch gekennzeichnet, dass** die Vorsprünge (19) zylindrisch kegelförmig ausgebildet sind.

6. Pumpenmotor nach Anspruch 1, 2, 3, 4 oder 5, **dadurch gekennzeichnet, dass** die Oberfläche des Spalttopfbodens (17) aufgrund der Vorsprünge (19) gegenüber einem ebenen Spalttopfboden (17) um mehr als das Zweifache vergrößert ist.

7. Pumpenmotor nach Anspruch 1, 2, 3, 4, 5 oder 6, **dadurch gekennzeichnet, dass** die Oberfläche des Spalttopbodens (17) aufgrund der Vorsprünge (19) gegenüber einem ebenen Spalttopfboden (17) um mehr als das Dreifache vergrößert ist.

8. Pumpenmotor nach zumindest einem der vorangehenden Ansprüche, **dadurch gekennzeichnet, dass** die Oberfläche des Spalttopfs (3) durch Kühlrippen (58), welche ausgehend von der Mantelfläche (59) des Spalttopfs (3) in Statornuten radial vorspringen, deutlich vergrößert wird.

9. Pumpenmotor nach zumindest einem der vorangehenden Ansprüche, **dadurch gekennzeichnet, dass** auf der Leiterplatte (20) vergrößerte Leiterbahnbereiche (54) vorgesehen sind, welche mit dem Wärmeleitmittel (53), z. B. der Wärmeleitpaste, in wärmeleitendem Kontakt stehen.

10. Pumpenmotor nach Anspruch 8, **dadurch gekennzeichnet, dass** Thermovias (55) in der Leiterplatte (20) vorgesehen sind, die im Bereich von Wärmequellen darstellenden Bauelementen (56) angeordnet sind und die Wärme auf die gegenüberliegenden Leiterplattenseite zu den vergrößerten Leiterbahnbereichen (54) transportieren.

## Claims

1. A pump motor (1), with a motor housing (10), a pump head (11) and a containment shell (3), wherein the pump head (11) with the containment shell (3) defines a wet chamber (26) and the containment shell (3) with the motor housing (10) defines a dry chamber (25), a permanent-magnet rotor (2) is mounted rotatably about an axis (49) in the wet chamber (26), a wound stator (4) and a printed circuit board (20) are arranged in the dry chamber (25) and the printed circuit board (20) lies opposite a containment shell base (17), **characterised in that** the containment shell base (17) has depressions (18) on a side located opposite the printed circuit board (20) and projections (19) on an opposing side.

2. A pump motor according to Claim 1, **characterised in that** the depressions (19) are filled with a heat-conducting medium (53), e.g. a heat-transfer compound, which form a heat-conducting path from the containment shell base (17) to the printed circuit board (20).

3. A pump motor according to Claim 1 or 2, **characterised in that** that the cross-section of the depressions (18) decreases in the paraxial direction and the direction of the permanent-magnet rotor (2).

4. A pump motor according to Claim 1, 2 or 3, **characterised in that** the surface of the containment shell base (17) is enlarged by more than twice compared with a flat containment shell base (17) due to the depressions (18).

5. A pump motor according to Claim 1, 2, 3 or 4, **characterised in that** the projections (19) are designed cylindrically conically.

6. A pump motor according to Claim 1, 2, 3, 4 or 5, **characterised in that** the surface of the containment shell base (17) is enlarged by more than twice compared with a flat containment shell base (17) due to the projections (19).

7. A pump motor according to Claim 1, 2, 3, 4, 5 or 6, **characterised in that** the surface of the containment shell base (17) is enlarged by more than three times compared with a flat containment shell base (17) due to the projections (19).

8. A pump motor according to at least one of the preceding claims, **characterised in that** the surface of the containment shell (3) is considerably enlarged by cooling fins (58), which starting from the peripheral surface (59) of the containment shell (3) radially project into stator slots.

9. A pump motor according to at least one of the preceding claims, **characterised in that** enlarged printed-conductor regions (54) are provided on the printed circuit board (20), which regions are in heat-conducting contact with the heat-conducting medium (53), e.g. the heat-transfer compound.

10. A pump motor according to Claim 8, **characterised in that** thermal vias (55) are provided in the printed circuit board (20), which vias are arranged in the region of components (56) representing heat sources and which transport heat onto the opposing printed circuit board side to the enlarged printed-conductor regions (54).

## Revendications

1. Moteur de pompe (1), avec un carter de moteur (10), une tête de pompe (11), et une chemise d'entrefer (3), dans lequel la tête de pompe (11) délimite avec la chemise d'entrefer (3) une chambre humide (26) et la chemise d'entrefer (3) délimite avec le carter de moteur (10) une chambre sèche (25), un rotor à aimants permanents (2) dans la chambre humide (26) est monté en rotation autour d'un axe (49), un stator (4) enroulé et une carte de circuits imprimés (20) sont disposés dans la chambre sèche (25) et la carte de circuits imprimés (20) est opposée à un fond de chemise d'entrefer (17), **caractérisé en ce que** le fond de chemise d'entrefer (17) présente sur une face opposée à la carte de circuits imprimés (20) des évidements (18) et sur une face opposée des parties saillantes (19).

2. Moteur de pompe selon la revendication 1, **caractérisé en ce que** les évidements (19) sont remplis d'un milieu thermo-conducteur (53), par exemple d'une pâte thermo-conductrice, lesquels forment un trajet thermo-conducteur du fond de chemise d'entrefer (17) à la carte de circuits imprimés (20).

3. Moteur de pompe selon la revendication 1 ou 2, **caractérisé en ce que** la section transversale des évidements (18) diminue dans la direction parallèle à l'axe et en direction du rotor à aimants permanents (2).

4. Moteur de pompe selon la revendication 1, 2 ou 3, **caractérisé en ce que** la surface du fond de chemise d'entrefer (17), en raison des évidements (18), est augmentée de plus du double par rapport à un fond de chemise d'entrefer (17) lisse.

5. Moteur de pompe selon la revendication 1, 2, 3 ou 4, **caractérisé en ce que** les parties saillantes (19) sont réalisées de manière cylindrique et conique.

6. Moteur de pompe selon la revendication 1, 2, 3, 4 ou 5, **caractérisé en ce que** la surface du fond de chemise d'entrefer (17), en raison des parties saillantes (19), est augmentée de plus du double par rapport à un fond de chemise d'entrefer (17) lisse.

7. Moteur de pompe selon la revendication 1, 2, 3, 4, 5 ou 6, **caractérisé en ce que** la surface du fond de chemise d'entrefer (17), en raison des parties saillantes (19), est augmentée de plus du triple par rapport à un fond de chemise d'entrefer (17) lisse.

8. Moteur de pompe selon au moins l'une des revendications précédentes, **caractérisé en ce que** la surface de la chemise d'entrefer (3) est agrandie significativement par des nervures de refroidissement (58), lesquelles font saillie radialement dans des rainures de stator à partir de la surface d'enveloppe (59) de la chemise d'entrefer (3).

9. Moteur de pompe selon l'une quelconque des revendications précédentes, **caractérisé en ce que** des zones de tracés conducteurs (54) augmentées, lesquelles sont en contact thermo-conducteur avec le milieu thermo-conducteur (53), par exemple la pâte thermo-conductrice, sont prévues sur la carte de circuits imprimés (20).

10. Moteur de pompe selon la revendication 8, **caractérisé en ce que** des trous d'interconnexion thermiques (55), qui sont disposés dans la zone de composants (56) représentant des sources de chaleur et transportent la chaleur sur la face de carte de circuits imprimés opposée vers les zones de tracés conducteurs (54) agrandies, sont prévus dans la carte de circuits imprimés (20).
